# EUROPÄISCHE PATENTSCHRIFT

(11) **EP 2 725 143 B1**
(45) Veröffentlichungstag und Bekanntmachung des Hinweises auf die Patenterteilung: **15.05.2019**
(21) Anmeldenummer: 13190075.5
(22) Anmeldetag: 24.10.2013
(51) Int. Cl.: E02B 9/00, F03B 13/06

(54) **Pumpspeicherwerk zur Energiespeicherung**
Pump storage device for energy storage
Centrale de pompage accumulation pour l'accumulation d'énergie

(30) Priorität: 24.10.2012 DE 102012110155; 22.02.2013 DE 102013101799
(43) Veröffentlichungstag der Anmeldung: 30.04.2014
(73) Patentinhaber: Roos, Thomas, 99428 Weimar (DE)
(72) Erfinder: Roos, Thomas, 99428 Weimar (DE)
(74) Vertreter: Strehl Schübel-Hopf & Partner

(56) Entgegenhaltungen:
- DE-A1- 2 843 675
- US-A- 3 939 356
- US-A- 3 996 741
- US-A- 4 282 444
- US-A- 4 538 414
- US-A- 5 389 821

## Beschreibung

Im Zuge der Diskussion zum Klimawandel und Atomausstieg wird durch die Politik und Industrie der Ausbau der erneuerbaren Energien, wie z.B. der Windkraftenergie im Offshore-Bereich, die mit im Meer stehenden Windkraftanlagen (z.B. Windrädern) gewonnen wird, gefordert. Dabei stellt sich jedoch das Problem einer effektiven Energiespeicherung. Insbesondere wird dabei diskutiert, dass die Energie in der Nähe der Offshore-Windkraftanlagen nicht mit Pumpspeicherwerken gespeichert werden kann und daher erst mit viel Aufwand und mittels langer Leitungstrassen in die Gebirge gebracht werden muss, um mit dort vorhandenen Pumpspeicherwerken gespeichert zu werden.

Die prinzipielle Wirkungsweise eines Pumpspeicherwerks besteht darin, dass eine Flüssigkeit, typischerweise das Wasser, in Zeiten einer niedrigen Stromnachfrage mittels einer elektrisch angetriebenen Pumpe aus einem Unterbecken in ein höher gelegenes Oberbecken gefördert und bei Strommangel über eine Turbine mit Generator zurück in das Unterbecken abgelassen wird.

Herkömmliche Pumpspeicherwerke nutzen meist künstlich umgebaute Ober- und Unterbecken mit offener Wasseroberfläche (Freispiegel) und sind daher bezüglich des Standortes an bergige Regionen gebunden, wobei selbst dort äußerst wenige geeignete Standorte zur Verfügung stehen.

Eine Kombination aus Energiespeicherung und Entzerrung der Spitzendurchflussmengen von Regenwasser vor allem für große städtische Ballungszentren wird in der EP 599 691 B1 vorgeschlagen. Dies wird durch die Regulierung eines Ablaufs von Regenwasser in einem Oberflächenwasser-Sammelnetz ermöglicht, wobei die entsprechende Einrichtung außerdem mindestens eine zweite Rohrleitung umfasst, die mit einem Schieber versehen ist und das Oberflächenwasser-Sammelnetz unmittelbar und/oder über die Pumpen-Turbinen-Gruppe eines Wasserkraftwerks mit einem zweiten, tiefliegenden Reservoir verbindet, wobei das im zweiten Reservoir vorübergehend gespeicherte Wasser durch eine Pumpe und/oder durch die Pumpen-Turbinen-Gruppe zum Oberflächenwasser-Sammelnetz zurückgeführt wird. Zum Belüften und zur Herstellung eines Druckausgleichs sind innerhalb des Leitungs-Netzwerks mehrere Belüftungsschächte vorgesehen.

In DE 10 2008 020 987 A1 wird ein Pumpspeicherkavernenkraftwerk vorgestellt, bei dem eine unterirdische Kaverne natürlichen Ursprungs, z.B. eine ausgesolte Salzkaverne oder eine Erdöl- oder Erdgas-Lagerstätte, im Boden eines natürlichen Gewässers als das Unterbecken genutzt wird und das natürliche Gewässer als das Oberbecken fungiert. Ein solches Pumpspeicherwerk hat zum einen mit einer Verringerung des durch das Herauspumpen des Wassers aus der Kaverne geschaffenen Energiepotentials durch das durch die Kavernenwände wieder hineinströmende Wasser zu kämpfen. Zum anderen ist man auch bei diesem Aufbau in der Wahl des Standorts für das Pumpspeicherwerk wegen der Notwendigkeit einer geeigneten Kaverne stark eingeschränkt.

Die Weiterleitung der beispielsweise in neu errichteten oder ausgebauten Offshore-Windkraftanlagen gewonnenen Energie über zusätzliche Trassen zu den vorhandenen bzw. neu zu errichtenden Pumpspeicherwerken bekannter Art verursacht zum einen erhebliche Leitungsverluste, zum anderen langwierige Genehmigungsverfahren und erhebliche Baukosten. Darüber hinaus ist davon auszugehen, dass das bereits vorhandene (Stromversorgungs-)Netz anders konzipiert werden muss, um dem unstetigen Strom aus erneuerbaren Energien und den damit verbundenen Netzschwankungen gewachsen zu sein.

Die am Prioritätstag der vorliegenden Anmeldung unveröffentlichte PCT/EP2012/057021 offenbart ein Pumpspeicherwerk in einem Gewässer, umfassend einen künstlichen (d.h. künstlich errichteten), wasserdichten, abschließbaren Hohlkörper, der an oder in einem Boden des Gewässers angeordnet ist oder schwimmend daran befestigt ist, mindestens eine Pumpe zum Abpumpen des Wassers aus dem Hohlkörper, mindestens eine Turbine zur Stromerzeugung beim Fluten des Hohlkörpers mit Wasser, wobei die Pumpe(n) und die Turbine(n) in einem begehbaren Maschinenhaus im bzw. am Boden des Gewässers (z.B. ausgehoben und/oder ausgekleidet und/oder als selbsttragende Konstruktion errichtet) mit Anschluss an den abschließbaren Hohlkörper untergebracht sind, sowie eine Be- und Entlüftungsleitung, die den Hohlkörper mit der Oberfläche des Gewässers verbindet. Besteht der künstlich errichtete Hohlkörper aus mehreren voneinander getrennten Abschnitten, so kann das Maschinenhaus als eine zentrale (natürliche oder künstlich errichtete) Kaverne mit Anschluss an mehrere oder an alle Abschnitte des Hohlkörpers ausgestaltet sein.

Der vorliegenden Erfindung liegt die Aufgabe zugrunde, eine Vorrichtung zum Speichern und Freigeben der Energie aus einer in einem Gewässer liegenden Kraftanlage, wie z.B. einer Offshore-Windkraftanlage, anzugeben, die sich zum Teil direkt am bzw. unter dem Ort der Kraftanlage oder in deren Nähe befinden kann. Diese ähnelt der Vorrichtung der PCT/EP2012/057021, weist im Gegensatz zu dieser jedoch Speicherstollen bzw. Tunnel auf, die unterhalb des Meeresbodens und teilweise auch bis unter festes Land (Festland oder eine Insel) geführt sind und über das feste Land bewettert werden können. Der Vorteil gegenüber der Vorrichtung der PCT/EP2012/057021 liegt darin, dass entweder tiefe Meeresrinnen oder große Tiefen unterhalb des Meeresbodens genutzt werden können, wodurch ein hydrostatischer Wasserdruck mit großer Wassersäule (z.B. 500 m) und damit ein sehr hohes Energiepotential zur Verfügung stehen.

US5389821A offenbart ein Gewässer-Pumpspeicherwerk gemäß dem Oberbegriff des Anspruchs 1 der vorliegenden Erfindung.

Die Erfindung betrifft demnach ein Gewässer-Pumpspeicherwerk (nachfolgend auch mit "PSW" bezeichnet), umfassend
- einen Speicher-Hohlraum (6) in der Form eines Tunnels oder Stollens mit mindestens einem in einem Boden eines Gewässers oder im Gestein und/oder Sediment (3) eines Meereshanges (4) angeordneten ersten Ende und einem zweiten Ende, welches sich unterhalb einer Land-Oberfläche (1) befindet,
- eine Maschinenkaverne (7), die einen Anschluss an das erste Ende des Hohlraums (6) aufweist und mit einem Maschinensatz bestückt oder bestückbar ist, umfassend mindestens eine Pumpe zum Abpumpen von Wasser aus dem Hohlraum (6) und mindestens eine Turbine zur Stromerzeugung beim Fluten des Hohlraums (6) mit Wasser,
- einen Wasser-Zulauf (8) zur Maschinenkaverne (7), und
- einen Entlüftungsschacht (5), dadurch gekennzeichnet, dass sich der Entlüftungsschacht (5) von dem zweiten Ende des Hohlraums (6) bis zur Land-Oberfläche (1) erstreckt.

Dieses Pumpspeicherwerk ist vor allem für die Anwendung in nur einem einzigen Gewässer vorgesehen, insbesondere zur Anwendung im Meer; eine Mehrzahl von Speicherbecken, z.B. ein oberes und ein unteres Speicherbecken, wird nicht benötigt.

In Kombination mit dem unerschöpflichen Angebot an dem Speichermedium Wasser kann mit der erfindungsgemäßen Vorrichtung die elektrische Energie z.B. direkt am Ort einer Stromerzeugung (insbesondere eines Windparks) vor allem im Offshore-Bereich in großen Mengen gespeichert werden. Die von den Offshore-Windparks produzierten Überkapazitäten können im PSW zwischengespeichert und bei Unterkapazitäten im Netz nachgeführt werden. Dies ermöglicht zum einen eine Vergleichmäßigung der Stromeinspeisung ins Netz und zum anderen eine wirtschaftliche Nutzung der gewonnenen Windenergie für die zur Annahme verpflichteten Netzbetreiber z.B. durch das "Zwischenparken" bis zum wirtschaftlichen Weiterverkauf. Im Vergleich zu Pumpspeicherwerken, die in künstlichen Gewässern oder in kleineren Speicherseen angeordnet sind, ist kein künstlich oder natürlich geschaffenes Oberbecken vonnöten, das notwendigerweise ein beschränktes Volumen aufweist und dessen Wasserspiegel daher im Falle der Flutung des zur Wasserspeicherung vorgesehenen Hohlraums gegebenenfalls stark absinkt, was zu Druckschwankungen aufgrund der schwankenden Fallhöhe führen kann. Das erfindungsgemäße Pumpspeicherwerk ist dagegen so ausgelegt, dass aufgrund des unerschöpflichen Wasservorrats im einzigen Speicher (meist dem Meer) keine Wasserstandsänderungen auftreten können und demnach für die Energiegewinnung auch nicht zu berücksichtigen sind.

Die Vorrichtung kann in Ausnahmefällen jedoch auch in einem natürlichen oder künstlichen Binnengewässer eingesetzt werden. So ist eine Anwendung von kleineren Anlagen nach der Erfindung, z.B. mit einem oder zwei Maschinensätzen weiter unten spezifizierter Art, auch in tiefen Talsperren möglich. Hier besteht die Möglichkeit, eine Talsperre zur Ausführung der Stollen und der Maschinenkaverne abzusenken und nach der Fertigstellung der Anlage wieder mit Wasser zu füllen.

In spezifischen Ausgestaltungen können mehrere voneinander getrennte oder miteinander verbundene Maschinenhäuser in der Maschinenkaverne oder in mehreren verschiedenen, vorzugsweise in Nachbarschaft zueinander befindlichen Maschinenkavernen vorgesehen sein, in denen beispielsweise Pumpe(n) und Turbine(n) mit Anschluss an mehrere erste Endabschnitte des Hohlkörpers untergebracht sind.

Bevorzugte Ausführungsformen des PSW sind in den abhängigen Ansprüchen und in der nachfolgenden Beschreibung angegeben.

Ein weiterer Aspekt der Erfindung ist das Verfahren zum Betrieb des erfindungsgemäßen PSW. Das grundsätzliche Funktionsprinzip besteht dabei darin, die Energie über den Einsatz von Pumpen zu speichern und durch Turbinen wieder zu regenerieren. Es besteht auch die Möglichkeit, Pumpturbinen einzusetzen, welche beide Funktionen erfüllen können. Neben der Nutzung des PSW als Wasserspeicher kann auch eine Nutzung als Druckluftspeicher vorgesehen sein. In diesem Fall dient zusätzlich zu dem Speichermedium Wasser auch komprimierte Luft als Energiespeichermedium. Hierbei wird in den bereits leergepumpten Hohlraum mit Hilfe eines Kompressors oder Verdichters erzeugte Druckluft eingeblasen. Beim Ablassen des Überdrucks kann die komprimierte Luft sodann eine oder mehrere Turbinen antreiben.

Abweichend vom klassischen Pumpspeicherwerk, welches die Energie in Form von potentieller Energie durch das Heben von Wasser auf ein bestimmtes Höhenniveau speichert, wird bei der erfindungsgemäßen Konstruktion des PSW die Energie durch das Verdrängen von Wasser gegen einen bestimmten hydrostatischen Druck gespeichert. Während beim klassischen Pumpspeicherwerk das Energiepotential über das Höhenniveau des Oberbeckens relativ zu dem Unterbecken abgebildet wird, wird bei dieser Konstruktion das Energiepotential über den anstehenden hydrostatischen Druck (Wassersäule) bestimmt.

Im Folgenden werden einzelne Ausgestaltungen der Vorrichtung mit Angabe möglicher vorteilhafter Varianten beschrieben.

Das PSW speichert Energie durch die Verdrängung von Wasser aus einem vorzugsweise zumindest größtenteils wasserdichten, in der Regel absperrbaren Hohlkörper mit mindestens einem in einem Boden eines Gewässers angeordneten ersten Endabschnitt und einem zweiten Endabschnitt, der sich unterhalb einer Land-Oberfläche befindet. Zu diesem Zweck ist es als ein Bauwerk ausgestaltet, das sich der natürlichen Umgebung des oder der Windparks oder anderer energieerzeugender Einrichtungen bedient, wobei auch künstlich gestaute Wasser-Reservoirs unter den Ausdruck "natürliche Umgebung" fallen sollen.

Das Herzstück des PSW ist mindestens eine Maschinenkaverne, die zur Aufnahme der üblichen Maschinen wie Pumpen/Turbinen, Generatoren, Energieweiterleitungsanlagen und dergleichen vorgesehen ist. Diese Kaverne befindet sich an einem Ort unterhalb einer Wasseroberfläche, in der Regel einer Meeresoberfläche, und/oder im Gestein (ggf. auch Sediment) eines Meereshanges. Sie liegt in der Regel in großer Tiefe, z.B. auf ca. 100-500 m unter dem Meeresspiegel. Falls das Meer ein Flachmeer ist, liegt sie unterhalb des Meeresbeckens und damit unter dem Meeresboden. Falls das Meer einen Graben in mindestens der genannten Tiefe aufweist, liegt sie in der Nähe eines Hangs dieses Grabens oder unter dem Graben im Gestein. Je nach Gestalt des Meereshanges kann sie, muss sie aber nicht, unterhalb einer Wasseroberfläche (insbesondere des Meeresbereichs, in dem sich der Hang befindet) liegen. In der Regel ist sie durch bergmännische Maßnahmen als ggf. abgedichteter Hohlraum im natürlichen Untergrund, z.B. Fels, ausgeführt.

Als Wasserspeicher dient mindestens ein Hohlraum, der die Form eines unverzweigten oder verzweigten Tunnels oder Stollens besitzt. Die Maschinenkaverne besitzt einen Anschluss an ein erstes Ende dieses Hohlraums, das sich in der Nähe und damit ebenfalls unterhalb der genannten Wasseroberfläche und/oder im Gestein (bzw. ggf. auch im Sediment) des genannten Grabenhangs befindet. Dieser ist vorzugsweise als druckwasserdichtes Revisionsschott oder druckwasserdichte Montageöffnung ausgestaltet, um bei Bedarf die Maschinenkaverne wasser- und druckdicht vom Wasserspeicher zu trennen. Der Speicher-Hohlraum kann z.B. bergmännisch erstellt (künstlich aufgefahren) sein, gegebenenfalls aber stattdessen oder zusätzlich ein natürlicher Hohlraum sein oder einen oder mehrere solche Hohlräume umfassen. Er erstreckt sich, z.B. in felsigen Schichten unter dem Gewässerboden (Meeresgrund), in Richtung eines festen Landes (Festland oder Insel) oder unter diesem Land. Ein zweites Ende des Speicher-Hohlraums befindet sich an anderer Stelle, möglicherweise weit (z.B. bis zu ca. 100 km) entfernt, unter diesem festen Land. Der Hohlraum kann auch mehrere z.B. parallel zueinander oder sternförmig geführte Stollen besitzen, oder die Maschinenkaverne besitzt Anschlüsse zu zwei oder noch mehr Hohlräumen der genannten Art. Bei Bedarf ist der Hohlraum künstlich untergliedert, z.B. durch abdichtbare Tore. Sofern das natürliche Wandmaterial des Hohlraums ausreichend dicht ist, ist eine künstliche Abdichtung der Wände nicht erforderlich; sie kann oder muss jedoch in manchen Fällen bzw. an manchen Orten vorgenommen werden.

Der Durchmesser der Stollen- bzw. Tunnels wird fachmännisch nach Bedarf unter Berücksichtigung einer ausreichenden Standsicherung und Druckstabilität gewählt, beispielsweise kann er zwischen 5 und 25 m, vorzugsweise zwischen 12 und 19 m liegen.

Das zweite Ende des Hohlraums oder, soweit es mehrere solche Enden gibt, jedes dieser Enden, hat in der Regel die Form einer Kaverne oder Höhle mit einer Größe, die es ggf. gestattet, eine von oben eingesetzte Tunnelbohrmaschine aufzunehmen, die ausgehend von diesem Ort den Speicher-Hohlraum bzw. Tunnel oder Stollen bergmännisch auffährt, sofern keine natürlichen Hohlräume hierfür genutzt werden sollen oder können. Dieses Hohlraumende bzw. die das Ende bildende Kaverne oder Höhle ist mit einem Be- und Entlüftungsschacht versehen, der dieses Ende/diese Enden mit der darüber liegenden Landoberfläche verbindet. Bei Vorhandensein mehrerer zweiter Enden des Hohlraums, beispielsweise bei Vorhandensein mehrerer Tunnel oder Stollen, besitzt vorzugsweise jedes dieser Enden einen Be- und Entlüftungsschacht. Weitere Entlüftungsschächte, insbesondere solche, die von dem oder den für die Wasserspeicherung vorgesehenen Zwischenbereich(en) zwischen dem ersten Ende und dem oder den zweiten Enden des Hohlraums, also z.B. von Bereichen zwischen den Tunnel- oder Stollenenden ausgehen, sind in der Regel nicht vorhanden, auch wenn dies dem Grunde nach nicht immer ausgeschlossen sein muss. Für den Fall, dass das PSW auch Druckluft speichern kann, sind an dem oder den Hohlraumende(n) Verschlussorgane angebracht, die den Hohlraum gegen das Entweichen der Druckluft abdichten können.

Der Zustrom des Wassers in die Maschinenkaverne kann auf mehreren Wegen erfolgen, je nach relativer Lage der Maschinenkaverne und der geologischen Lage.

In einer ersten Ausführungsform der Erfindung befindet sich die Maschinenkaverne weit unterhalb des Gewässer- bzw. Meeresbodens. Diese Ausführungsform ist vor allem für geologische Formationen mit relativ flachen Gewässern geeignet wie beispielsweise die Nordsee. Da es wünschenswert ist, einen hohen hydrostatischen Druck auszunutzen, der vorzugsweise mehr als 100 m Wassersäule und stärker bevorzugt mehr als 300 m Wassersäule beträgt, wird die Maschinenkaverne in solchen Fällen tief unter dem Wasserboden, z. B. im anstehenden Fels, angeordnet. Ein Einlauf- und Auslaufschacht für das Speichermedium Wasser erstreckt sich von der Maschinenkaverne ausgehend durch das Gestein bzw. Sediment des Meeresbodens hindurch bis in das Gewässer hinein, idealerweise bis zur Gewässeroberfläche. Wenn dieser Schacht bis über die Gewässeroberfläche hinausragt, kann er zusätzliche Funktionen besitzen, z.B. als Versorgungsschacht und/oder als Bewitterungs-(Be- und Entlüftungs-)schacht ausgebildet sein.

Der Ein- und Auslaufschacht kann je nach Wassertiefe in Form eines großen Senkkastens bzw. einer Schachtbaustelle ausgeführt werden. Es besteht aber auch die Möglichkeit, dass der Ein- und Auslauf in den zuvor beschriebenen gewässerseitigen Versorgungsschacht integriert ist. Er kann unterhalb des Wasserspiegels, im Meer unterhalb des Tidehubs, ein Einlaufschott mit Rechenanlage aufweisen. Nach Fertigstellung und Inbetriebnahme stürzt das Wasser durch diese Konstruktion in den Schacht, passiert vorzugsweise Verschluss- und Regelorgane, die den Einlauf kontrollieren, und treibt die Pumpe/Turbine in der Maschinenkaverne an. Dabei werden die Speicher-Hohlräume geflutet. Die Luft entweicht über den land- oder inselseitigen Be- und Entlüftungsschacht. Über die Pumpen/Turbinen können die Speicher-Hohlräume auch wieder geleert werden, wenn überschüssige Energie gespeichert werden soll. Wenn das PSW auch als Druckluftspeicher genutzt werden soll, wird durch den seeseitigen Schacht Luft angesaugt und z.B. über ein entsprechendes Ventil mit hohem Druck in das entleerte Tunnel- bzw. Stollensystem gepresst.

In einer zweiten Ausführungsform der Erfindung befindet sich die Maschinenkaverne im (Fels)Boden auf einem Höhenniveau oberhalb des tiefsten Bereichs des Gewässers. Diese Ausführungsform ist im Wesentlichen für die Anwendung im Meer geeignet, und zwar an Orten in Nachbarschaft zu tiefen See-Gräben, die z.B. bis auf eine Tiefe von 500 m oder sogar mehr reichen. Die Maschinenkaverne ist in diesen Fällen am bzw. im Hang des See-Grabens angeordnet. Es besteht aber auch die Möglichkeit, dass die Maschinenkaverne unter dem Meerestief liegt. Der Abstand der Kaverne zur Hangfläche (Außenseite des Felsmassivs, in dem sich die Kaverne befindet) muss ausreichend groß sein, um die Wasserdichtigkeit der Kaverne gegenüber einsickerndem Meerwasser zu sichern. Die tatsächlich zu wählende Felswanddicke zwischen Meerestief/Meereshang ergibt sich aus der Dichte des anstehenden Felsens und dessen Trennflächencharakter. Bei ausreichend dichten geologischen Formationen sollte der Abstand in der Regel die anstehende Meerestiefe (z.B. 300 m, oder 500 m) nicht oder nicht wesentlich unterschreiten. Gegebenenfalls kann ein Dichtungsschleier zwischen Kaverne und Außenseite des Massivs gesetzt werden, beispielsweise durch Injektionen in das Gestein, die mit Betonsuspension verpresst werden.

Wenn sich das Höhenniveau der Kaverne oberhalb oder mindestens auf Höhe des tiefsten Punktes des Seebodens befindet, ist es in diesen Fällen möglich, den Wasserzulauf (Ein- und Auslaufschacht) quer, z.B. waagrecht oder schräg, aus dem Meeresreservoir in das nebenliegende Gestein zu führen, in dem sich die Maschinenkaverne befindet. Dieser Wasserzulauf ist als Druckstollen ausgeführt. Wenn sich die Maschinenkaverne unter dem Meerestief befindet, wird dieser Druckstollen in Form eines Druckschachts senkrecht oder schräg nach oben in das Meeresreservoir geführt, je nach den Gegebenheiten des Gesteins. Am Einlaufbereich des Druckstollens wird ein Verschlussorgan, vorzugsweise mit einer Rechenanlage und/oder einem Einlaufbauwerk, installiert. Der Druckstollen und die Maschinenkaverne werden mit separaten Regel- und Verschlussorganen wie z.B. Ringkolbenventilen, Rückschlagklappe oder dergleichen ausgebildet.

Das Meereswasser strömt über den Druckstollen und ggf. zusätzliche Druckleitungen in die für seine Speicherung vorgesehenen Hohlräume und treibt dabei synchron und/oder asynchron Pumpturbinen an. Über diese Maschinen können die Speicherstollen, -tunnel o. dgl. auch wieder geleert bzw. gelenzt werden. Es besteht aber auch die Möglichkeit, dass die Maschinenkaverne unter dem Meerestief liegt und der Druckstollen senkrecht als Druckschacht ausgeführt wird.

Wenn der Hang des Meer- oder Seegrabens relativ steil ist, kann in der zweiten Ausführungsform die Maschinenkaverne möglicherweise unter der Landoberfläche zu liegen kommen. In diesem Fall kann relativ problemlos die Kaverne mit einem gesonderten, zusätzlichen Schacht erschlossen werden, um einen besseren Zugang sowie die Parallelität bestimmter Bauarbeiten mit der Folge einer Bauzeitreduktion zu ermöglichen. Wenn die Maschinenkaverne nicht unter der Landoberflächen zu liegen kommt, kann in dieser Ausführungsform stattdessen ein zusätzlicher gewässerseitiger Schacht vorgesehen sein, der von der Maschinenkaverne ausgehend durch das Gestein bzw. Sediment des Meeresbodens hindurch bis zur Gewässeroberfläche geführt wird. Dieser Schacht kann z.B. als Versorgungsschacht und/oder als Bewitterungs- (Be- und Entlüftungs-)schacht ausgebildet sein.

In einer spezifischen Ausgestaltung der Erfindung, die mit allen vorgenannten Ausführungsformen kombinierbar ist, hat der insel- oder landseitige Be- und Entlüftungsschacht weitere Funktionen. Er kann als Versorgungsschacht ausgebildet sein und/oder von einer Werkhalle und/oder mit einem Portalkran überdeckt sein. Über diesen lässt sich durch den Schacht und die Speicher-Hohlräume die Maschinenkaverne erreichen. Zusätzlich kann er als Kabeltrasse dienen, durch die die zum Windpark o.ä. führenden Stromleitungen (z.B. HGÜ-Leitungen) geführt werden. Dies ermöglicht einen guten Zugang auch zu diesen Leitungen und deren Revision.

In besonderen Fällen kann ein zusätzlicher Revisions- und/oder Montagetunnel zwischen einzelnen Speicherstollen bzw. -tunneln notwendig werden, beispielsweise aus arbeitsschutzrechtlichen Erwägungen. Diese Aufgabe können die Speichertunnel oder -stollen selbst übernehmen, oder aber es wird ein Montagegang im Scheitel des jeweiligen Tunnels vorgesehen.

Im Folgenden wird als Beispiel der Meeresgrund betrachtet. Bei geringem Energiebedarf wird der als Wasserspeicher dienende Hohlraum über die Pumpenfunktion der ggf. vorhandenen Pumpturbinen bzw. mittels der Pumpen zumindest teilweise leergepumpt. Dabei entsteht im Gestein ein leergepumpter Hohlraum mit einem hohen Energiepotential. Das ausgepumpte Wasser speichert somit die elektrische Energie als potentielle Energie. Ergänzend kann in den leergepumpten Hohlraum Druckluft eingeblasen werden. Bei hohem Energiebedarf wird ggf. zuerst der Überdruck im Hohlraum über eine Turbine wieder abgelassen, und der Hohlraum wird (ggf. danach) über die Turbinenfunktion der ggf. vorhandenen Pumpturbinen bzw. mittels der Turbinen zumindest teilweise geflutet. Die gewonnene Energie wird über Generatoren und Transformatoren in das Stromnetz eingespeist. In der Regel sind folgende betriebstechnische Zustände bzw. deren verschiedene Varianten möglich:
- Ausgangszustand (Entladener Energiespeicher): Alle Wasserspeicher sind mit Wasser gefüllt. Alle vorgesehenen Absperrvorrichtungen sind geschlossen. Es liegt kein Stromüberschuss bzw. Überkapazität im Stromnetz vor.
- Schaffung eines Energiepotentials durch das Lenzen bzw. Leerpumpen der Hohlräume (Laden des Energiespeichers): Es besteht ein Stromüberschuss bzw. Überkapazitäten im Netz. Die Absperrvorrichtungen werden geöffnet. Über die Pumpen bzw. die Pumpfunktion der Pumpturbinen wird das Wasser aus dem Hohlkörper gegen den hydrostatischen Druck über den Ein- und Auslaufschacht ins Meer gepumpt. Dabei strömt über die Belüftungsleitungen Luft in den Hohlkörper. Gegebenenfalls vorhandene wasserdicht voneinander trennbare Abschnitte des Hohlkörpers leeren sich bzw. füllen sich mit Luft. Nach einem teilweisen oder vollständigen Lenzen des Wasserspeichers werden die Pumpen abgeschaltet und die Absperrorgane verschlossen. Dieser Vorgang kann gestaffelt je absperrbarem Hohlraumabschnitt, also Tunnel für Tunnel, Stollen für Stollen bzw. Kaverne für Kaverne, oder bei extremen Überkapazitäten parallel erfolgen. Ein oder mehrere der Tunnel oder Stollen können dabei (bei spezifischen Ausgestaltungen) in deren Längsrichtung kontinuierlich abgepumpt und belüftet werden. Dies kann z.B. durch eine gegenüber der Horizontalen leicht ansteigende Anordnung des jeweiligen Tunnels bzw. Stollens erreicht werden, z.B. mit einer Steigung von 10% oder weniger, in folgender Reihenfolge zunehmend bevorzugt: höchstens 6%, höchstens 3%, höchstens 1%.

- Nach dem Verschließen aller Absperrvorrichtungen kann ggf. das Energiepotential des PSW durch das Einblasen von Druckluft weiter erhöht werden: Der oder die Hohlräume sind, wenn dieser Schritt vorgesehen ist, mit einem oder mehreren geeigneten Absperrventilen versehen. Durch den seeseitigen Schacht wird Luft angesaugt. Über einen Kompressor oder einen Verdichter, der seeseitig im Maschinenhaus angeordnet ist, wird diese Luft verdichtet und gegen das oder die Absperrventile gedrückt, die sich dabei öffnen und die Druckluft in den oder die Hohlräume einströmen lassen. Der Druck in den Hohlräumen/Stollen entspricht dem anstehenden Wasserdruck (z.B. bei einer Wassertiefe von 500 m 500 bar). Danach ist das maximale Energiepotential des PSW erreicht.
- Zwischenzustand (Geladener Energiespeicher): Der Wasserspeicher ist vollständig gelenzt und mit Luft oder Druckluft gefüllt. Es liegt kein Strommangel bzw. Unterkapazität im Netz vor.
- Entladung des Energiepotentials: Bei druckluftgefüllten Hohlräumen: Vor dem Fluten der Hohlräume mit Wasser wird die Druckluft ausgeblasen, wobei sie mindestens eine Turbine antreibt. Diese Turbine kann sich im landseitigen Endabschnitt des Hohlkörpers, d.h. in der endseitigen Kaverne befinden, die den Hohlraum abschließt. Dabei wird Strom generiert. Unterstützend kann auch das Wasser bereits unter Druck eingespeist werden und die Luft herausdrücken.
- (Weitere) Entladung des Energiepotentials durch das Fluten der Hohlräume (Entladen des Energiespeichers): Es besteht ein Strommangel bzw. Unterkapazitäten. Die Absperrvorrichtungen werden geöffnet. Über die Turbinenfunktion strömt das Wasser aus dem Meer durch die Einlaufbauwerke mit dem vollen hydrostatischen Druck in den Speicher-Hohlraum (den/die Tunnel bzw. Stollen). Dabei kann die verdrängte Luft über die eine oder mehrere Entlüftungsleitungen aus dem Speicher-Hohlraum entströmen und beim Durchströmen der landseitig angeordneten Turbine nochmals einen kleinen Beitrag zur Energiegewinnung leisten. Der Hohlraum füllt sich mit Wasser. Nach einem vollständigen Fluten werden die Pumpturbinen/Turbinen abgeschaltet und die Absperrorgane verschlossen. Das Energiepotential ist verbraucht. Auch dieser Vorgang kann gestaffelt in Abschnitten des Hohlraums oder bei extremen Unterkapazitäten parallel in mehreren Stollen oder Tunneln erfolgen. Die durch die Turbinenfunktion der Pumpturbinen bzw. deren Generatoren erzeugte Energie wird über Transformatoren in das Stromnetz eingespeist. Auch dieser Vorgang kann für einen oder mehrere der Tunnel oder Stollen in deren Längsrichtung kontinuierlich erfolgen, z.B. in der oben genannten Ausgestaltung mit einer horizontalen Steigung in der Längsrichtung des Tunnels/Stollens.

Es sollte dabei deutlich sein, dass "vollständiges Fluten" nicht bedeuten muss, dass das Wasser den oder die Hohlräume vollständig befüllt. Da die befüllten Hohlräume über die Entlüftungsleitung(en) im Druckausgleich mit der Atmosphäre stehen, kann je nach Neigung und Lage der Hohlräume gegebenenfalls ein Luftpolster über der Wasseroberfläche (z.B. im Scheitel des Tunnels) stehen bleiben.

Die Verwendung von Druckluft als zusätzlichem Energiespeicher hat den Vorteil, dass die Druckluft die Stollen von Sickerwasser freihält.

Von maßgeblicher Bedeutung sind die Wechsel vom statischen (der Hohlraum oder einzelne Tunnel bzw. Stollen ist/sind leer bzw. voll) in den dynamischen Betriebszustand (Lenzen bzw. Fluten). Dabei kann zum einen das Anfahren der Pumpen gegen den hydrostatischen Druck vor dem Lenzen, zum Anderen das Anfahren der Turbinen am Beginn des Flutens ggf. mit Hilfe einer Steuerungseinheit sehr genau über das kontrollierte Öffnen der oder mindestens einer der Absperrvorrichtungen gesteuert werden. Beim Lenzen bzw. Leerpumpen kann vorzugsweise der volle hydrostatische Druck auf der Ausgangsseite der Pumpe anliegen; möglich ist z.B. eine Entlastung über die Entlüftungsleitung bis zum Meeressspiegel. Beim Fluten ist es günstig, über die Öffnungsgrade eine Synchronisierung der Turbine zu ermöglichen. Diese Zustände können im Zuge der maschinenbaulichen Planungen bzw. Optimierung der Anlage für die einzelnen Betriebszustände entsprechend den hydraulischen Verhältnissen berücksichtigt und in entsprechenden Fahrkurven hinterlegt werden. Die Steuerung der die Pumpen und die Turbinen enthaltenden Maschinensätze kann mit einer entsprechenden Messtechnik unterstützt werden. Insbesondere für diese Vorgänge ist es günstig, eine vorzugsweise drehzahlvariable Pumpturbine zu verwenden, die stärker bevorzugt mit einer weiteren, drehzahlfixierten Pumpturbine kombiniert ist.

### Lage:

Das PSW kann in flachen Meeresbereichen (Tiefen z.B. ab 20 bis 50 m) wie der Nordsee oder aber in Meeresbereichen mit tiefen Gräben oder Becken (vorzugsweise tiefer als 300 m, stärker bevorzugt tiefer als 400 oder sogar 500 m) in der Nähe von Inseln oder Festland errichtet werden. Die Nord- und Ostsee weisen flache Bereiche auf; in der Nordsee gibt es auch tiefe Rinnen, beispielsweise die norwegische Rinne. Es sind aber auch Errichtungen in anderen Meeren mit einem erreichbaren Felshorizont denkbar.

Weitere Vorteile der Erfindung werden nachfolgend anhand der in der Zeichnung und der zugehörigen Beschreibung dargestellten Ausführungsbeispiele erläutert. Diese sollen keine beschränkende Wirkung für den Erfindungsgegenstand haben, sondern als konkrete Beispiele dafür dienen. Insbesondere sind die Figuren im Allgemeinen nicht als maßstabsgetreu zu lesen.

Es zeigen:

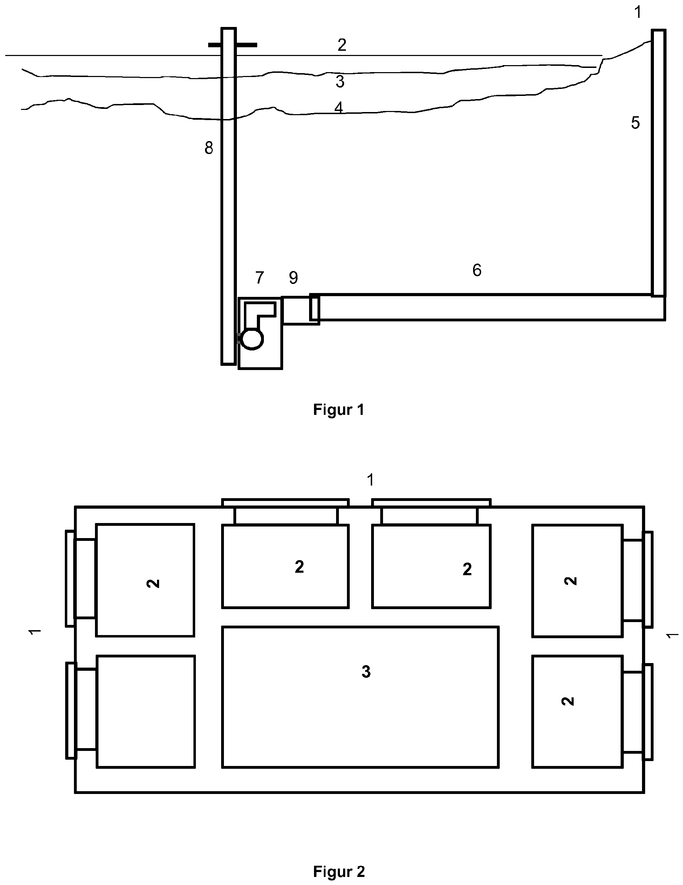

- Fig. 1: PSW mit seeseitigem lotrechten Einlauf-, Auslauf-, Montage-, Revisons-, Be- und Entlüftungsschacht sowie landseitigem lotrechtem Be- und Entlüftungsschacht mit alternativem Revisionszugang und Kabeldurchführung für HGÜ-Leitung;
- Fig. 2: Querschnitt (Grundriss) durch einen Schacht, z.B. unter einer Plattform, mit seeseitigem, lotrechtem Einlauf-, Auslauf-, Montage-, Revisons-, Be- und Entlüftungsschacht;

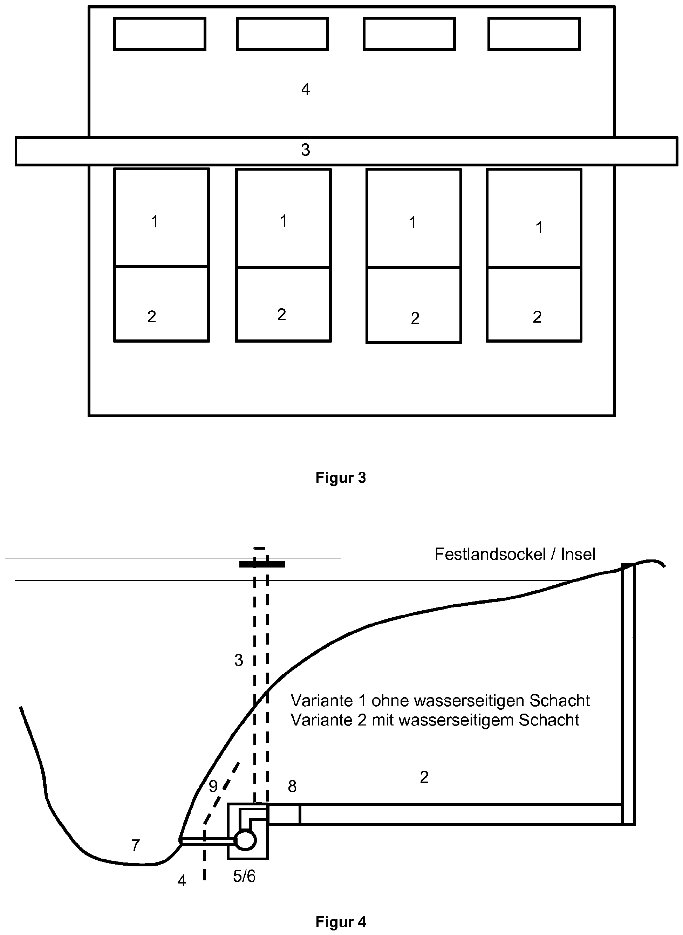

- Fig. 3: Ansicht des seeseitigen, lotrechten Einlauf-, Auslauf-, Montage-, Revisons-, Be- und Entlüftungsschachtes;
- Fig. 4: PSW mit seeseitigem horizontalen Druckstollen und lotrechten landseitigem Be- und Entlüftungsschacht und fakultativem wasserseitigem Schacht.

Die erfindungsgemäße Vorrichtung weist neben den oben genannten Komponenten vorzugsweise folgende Bestandteile und/oder Eigenschaften auf:
- Der landseitige Entlüftungsschacht kann auch als Revisionsschacht dienen. Außerdem kann er als Startgrube für die Tunnelbohrung dienen.
- Der Speichertunnel unterhalb einer Insel oder im Festlandsockel, der sich in Richtung Gewässer bzw. Meer erstreckt, kann z.B. mit seinem ersten Endabschnitt bis ins Zentrum mehrerer Offshore Windparks geführt werden.
- In oder in der Nähe der Maschinenkaverne kann sich eine Toskammer befinden, die turbulente Strömungen des einströmenden Wassers in eine laminare Strömung umwandelt, bevor das Wasser in den Hohlraum einläuft. An diesem Ort kann die Wendestelle für die Tunnelbohrmaschine vorgesehen sein.
- Wenn sich der Wasser-Zulauf zur Maschinenkaverne durch den Gewässerboden nach oben bis z.B. bis zur Oberfläche des Gewässers erstreckt, kann die Maschinenkaverne bzw. die Toskammer als Wendepunkt für die Tunnelbohrmaschine vorgesehen sein. Während diese anschließend weitere Felsbohrungen, z.B. für einen zweiten Stollen, vornimmt, kann die Vorrichtung bereits teilweise - unter Ausnutzung des bereits gebohrten Stollens bzw. Tunnels - in Betrieb genommen werden, was eine deutliche Zeit- und damit Kostenersparnis mit sich bringt. Dies ist natürlich nicht möglich, wenn der Wasser-Zulauf zur Maschinenkaverne nicht mit einer Be- und Entlüftungsfunktion gekoppelt werden kann.

Die Vorrichtung kann insbesondere umfassen:
- einen oder mehrere Maschinensätze aus Pumpturbine, Generator und Energieweiterleitungsanlage,
- künstlich abgedichtete Tunnel- und/oder Stollensysteme und/oder mindestens einen künstlichen Hohlkörper, der in dem/den bergmännisch vorgetriebenen Tunnel(n) oder Stollen oder in einem Teil davon unter Ausnutzung der natürlich vorhandenen bzw. bergmännisch erzeugten Hohlräume ausgebildet ist.
- Regelorgane, Verschlussorgane, insbesondere regelbare Absperrorgane gegen den Meeresraum und/oder die Toskammer und/oder gegen die Tunnel oder Stollen;
- ein Maschinenhaus oder Maschinenraum in der zentralen Kaverne, mit Anschluss an den künstlichen Hohlkörper, z.B. an einzelne Tunnel/Stollen, Rohre, Röhren oder dgl.;
- einen Maschinensatz, ggf. in der zentralen Kaverne, der eine Pumpe, eine Turbine (vorzugsweise beides zusammen in Form einer Pumpturbine), einen Generator und einen Transformator, vorzugsweise jeweils sämtliche genannten Komponenten mindestens einmal je Tunnel bzw. Stollen, aufweist;
- einen seeseitigen Wetter- (d.h. Belüftungs-), Wartungs- und Versorgungsschacht (Revisionsschacht), der sich ausgehend von der Maschinenkaverne vorzugsweise vertikal, durch das Gestein und/oder Sediment des Gewässer- bzw. Meeresboden hindurch, bis in das darüber liegende Gewässer (das Meer) und vorzugsweise bis zu dessen Oberfläche (bis zum Meeresspiegel) hin erstreckt, vorzugsweise mit Bedienplattform oberhalb des Gewässer- bzw. Meeresspiegels, z.B. in der Art einer Ölplattform mit einem senkrechten Schacht bis zur Kaverne am Meeresgrund mit integriertem ein Aus- und Einlaufbauwerk, das am Schacht unterhalb des Meeresspiegels angeordnet ist. Dieser Schacht kann auch die Funktion des Wasser-Zu- und Ablaufschachts übernehmen. Er kann z.B. im Zentrum von mehreren Offshore Windparks angeordnet sein und/oder bei der Herstellung des Bauwerks als Zielgrube dienen.

Nachfolgend werden einzelne Bestandteile der erfindungsgemäßen Vorrichtung näher beschrieben.

Das Ein- und Auslaufbauwerk ist vorzugsweise mit Mitteln zum Zurückhalten von Verschmutzungen, wie z.B. einem Schlammfang, einer Spüleinrichtung und räumlichen Rechen für das aus- bzw. einströmende Wasser ausgestattet. Der Ein- bzw. Auslauf kann vorzugsweise mit einem regelbaren Absperrorgan (z.B. mit Ringkolbenventilen), insbesondere innerhalb des Maschinenhauses bzw. der zentralen Kaverne (im Folgenden auch kurz: Kaverne), abgesichert sein. Der Einsatz eines gemeinsamen Bauwerks für Ein- und Auslauf des Wassers hat unter anderem den Vorteil, dass die Mittel zum Zurückhalten von Verschmutzungen nicht extra von den Verschmutzungen befreit und deshalb gewartet werden müssen: Schmutz, Algen, etc., welche beim Fluten des Hohlkörpers darin aufgefangen werden, werden beim Hinauspumpen des Wassers wieder weggespült.

Zur Vermeidung der Verklauselung bzw. Verlegung kann ein räumlicher Rechen mit schräg zulaufenden seitlichen Flächen und einer zwei- bis dreigeneigten vertikalen Fläche in der Art einer Haube angeordnet werden.

Ferner können in und/oder außerhalb der Kaverne Revisionsverschlüsse (z.B. Schieber) vorgesehen sein, um Revisionen bzw. Reparaturen der inneren Absperreinrichtungen zu ermöglichen. Innerhalb der Kaverne können beispielsweise jeweils ein Maschinensatz für einen oder zwei Tunnel bzw. Stollen oder sonstige Speicherabschnitte, die eine Pumpturbine, einen Generator und einen Transformator enthalten, mit ausreichend Montagefreiraum installiert sein. Dabei sollte auf eine maximale Zugänglichkeit und den minimalen Platzbedarf pro Maschinensatz geachtet werden. Bei einem solchen Aufbau bleibt die Mittelposition für Revisionsfälle an jeweils einem Maschinensatz frei. Die Höhe der Kaverne kann sich nach der Bauhöhe der Maschinensätze zuzüglich etwaiger Montagehilfsmittel, wie z.B. Portalkräne mit Anschlagmitteln etc., richten.

Oberhalb des Maschinenhauses bzw. der Kaverne kann ein Wetter- und Versorgungsschacht (Revisionsschacht, kurz: Schacht) einbinden. Dieser verbindet die Kaverne mit der Meeres- oder Seeoberfläche. Innerhalb dieses Schachtes können die Be- und Entlüftungsleitungen, ein Fahrstuhl bzw. Personenfahrkorb, ein Seil einschließlich der Anschlagmittel für Montagen an den Maschinensätzen, ggf. eine Luftansaugleitung für die Erzeugung von Druckluft und die Schächte für den Zu- und Ablauf hochgeführt werden. Der Revisionsschacht sorgt für einen dauerhaften Zugang zur Maschinentechnik. Zur Revision von unter Wasser und am oder im Boden des Gewässers angeordneten Maschinen, Geräten sowie diversen Bauelementen des PSW (insbesondere auch des Speicher-Hohlraums) können Techniker durch den Revisionsschacht trockenen Fußes ins Maschinenhaus gelangen und Werkzeuge und Ersatzteile befördert werden, z.B. mittels einer im Schacht angeordneten Hebevorrichtung. Insbesondere sind daher grundsätzlich Kontrolluntersuchungen und Reparaturen einzelner Elemente zur Laufzeit des PSW, d.h. ohne Unterbrechung, jederzeit möglich. Das Maschinenhaus oder mehrere Maschinenhäuser (z.B. bei Anlagen mit mehreren Tunneln/Stollen etc.) kann/können im unteren Teil des Revisionsschachts integriert sein oder daran angeschlossen sein und ein eigenes Gehäuse haben. Bei der letzteren Variante kann anstelle eines trockenen Schachtes auch ein Senkkasten zur Beförderung von Menschen und Geräten zwischen der Gewässeroberfläche und dem begehbaren Maschinenhaus verwendet werden.

Vorzugsweise hat der ggf. vorhandene Schacht oberhalb der Meeresoberfläche eine umlaufende Montageplattform. Diese ist vorzugsweise oberhalb des maximalen Wellenschlages angeordnet. Sie kann beispielsweise einen Hubschrauberlandeplatz, eine Montagehalle einschließlich eines Portalkrans zum Herausheben der Maschinensätze, einen Schiffsanleger einschließlich notwendiger Schifffahrtszeichen sowie ein Betriebsgebäude mit steuertechnischen und telekommunikativen Einrichtungen aufnehmen.

Nachfolgend werden zwei Beispiele für einzelne Ausführungsarten des erfindungsgemäßen PSW beschrieben, die auch durch die Figuren erläutert werden. Es sei darauf hingewiesen, dass jedes der anhand dieser Beispiele beschriebenen Merkmale auch unabhängig von den Beispielen mit jeder der beschriebenen Ausführungsformen der Erfindung kombinierbar ist, bzw. dass einzelne oder auch mehrere Elemente dieser Beispiele weggelassen werden können, soweit sie nicht zwingend erforderlich sind bzw. nur in Kombination mit einem weiteren Element genutzt werden können.

### Beispiel 1: Pumpspeicherwerk für Flachwasserbereiche im Meer:

Das Speichermedium wird aus zwei separaten Tunneln/ Stollen in den felsigen Schichten unter dem Meeresgrund gebildet. Der Speicher aus den Zwillingsstollen wird in einer Tiefe von 400 bis 500 m mit einem Durchmesser von 12 bis 19 m unterhalb des Meeresbodens in Richtung Gewässer bzw. Energiequelle aufgefahren. Nach Herstellung des landseitigen Be- und Entlüftungsschachtes, der auch für Revisionen nutzbar ist, wird die Tunnelbohrmaschine eingesetzt. Hierfür ist es notwendig, dass der Schacht am Fußpunkt etwas aufgeweitet wird (kleine Kaverne). Vor dort aus fährt die Tunnelbohrmaschine den Speicherstollen bzw. -tunnel auf.

Während der landseitige Schacht aufgefahren wird, laufen die Vorbereitungen auf dem Meer mit dem Setzen eines großen Senkkastens (ähnlich wie bei Brückenpylonen) durch die Sedimentschichten bis auf den anstehenden Felshorizont, Anschließend wird der Senkkasten gegen den anstehenden Felshorizont mittels Verpressarbeiten abgedichtet. Nach Auffahren des landseitigen Schachtes wird die Schachtbohrmaschine auf die Offshore - Baustelle umgesetzt und fährt den seeseitigen Schacht bis zur Endteufe auf. Von dieser Endteufe aus wird die Kaverne einschl. Trafokaverne und Toskammer ausgebrochen. Das freiwerdende Abbruchmaterial des Schachtes und der Kaverne kann z.B. zur Kolksicherung von Windkraftanlagen der umliegenden Offshore Windparks genutzt werden.

Nach Abschluss der Ausbrucharbeiten für die Kaverne ist mit dem Eintreffen der vom Land her arbeitenden Tunnelbohrmaschine zu rechnen. Am Ende des Tunnels unterhalb des Meeresspiegels wird im Bereich der Toskammer ein Wendeplatz für die Tunnelbohrmaschine vorbereitet. Nach deren Eintreffen wird diese gewendet und fährt zurück in Richtung Land bzw. Küste. In der Kaverne erfolgt der weitere Ausbau und die Tunnelröhre 1 kann als Speicher in Betrieb genommen werden. Damit sind 50% der Anlage in Betrieb.

Der Einlauf-, Wetter- und Versorgungsschacht auf dem Meer wird also parallel zum Auffahren der Tunnel errichtet. Dieser Schacht erhält unterhalb des Wasserspiegels ein Einlaufschott mit Rechenanlage. Nach Fertigstellung stürzt das Wasser durch diese Konstruktion in den Schacht, passiert die Verschluss- und Regelorgane im Einlaufbauwerk und treibt die Pumpturbinen (Synchron- und Asynchron-Maschinen) in der Kaverne an. Dabei werden die Speichertunnel 1 und 2 geflutet. Die Luft entweicht über den Entlüftungsschacht an Land. Über diese Maschinen können die Speichertunnel auch wieder geleert werden. Dann strömt die Luft von Land her nach.

Der Wetter- und Versorgungsschacht an Land dient dabei nicht nur als Be- und Entlüftung. Er wird von einer Werkhalle mit einem Portalkran überdeckt. Über diesen kann durch den Schacht und die Speichertunnel die Maschinenkaverne erreicht werden. Die Speicherstollen sind von der Kaverne durch ein Schott bzw. eine druckwasserdichte Montageöffnung getrennt.

Die Speicherstollen können neben ihrer Speicherfunktion auch als Kabeltrasse für Offshore Windparks genutzt werden und sichern somit die Revision ab.

### Beispiel 2: Pumpspeicherwerk für Meeresgräben oder -rinnen:

Ein Pumpspeicherwerk kann den hydrostatischen Wasserdruck in der Tiefe einer natürlichen Tiefseerinne nutzen. Folgende Strukturen sind hierfür erforderlich:
- Landseitiger Wetter- und Revisionsschacht im Festlandsockel (Startgrube)
- Speichertunnel unterhalb des Festlandsockels
- Maschinenkaverne am Rand der Tiefseerinne (Wendestelle Tunnelbohrmaschine)
- Druckstollen mit Einlaufbauwerk von der Maschinenkaverne in die Tiefseerinne
- Regel- und Verschlussorgane
- Maschinensätze aus Pumpturbine Generator und Energieweiterleitungsanlage

Das Speichermedium wird aus zwei separaten Tunneln im Festlandsockel der jeweiligen Küste oder Insel gebildet. Der Zwillingstunnel wird bis an den Rand der Tiefseerinne mit einem Durchmesser von 12 bis 19 m aufgefahren. Dazu wird nach Errichtung des landseitigen Wetter- und Revisionsschachtes eine Tunnelbohrmaschine in diesen Schacht gesetzt. Von dort aus fährt die Tunnelbohrmaschine den Speicherstollen bis ca. 1.000 m vor der Festlandsockelflanke auf.

Am Ende des Tunnels in der Nähe der Sohle des Meerestiefs und unterhalb des Meeresspiegels wird im Fels eine Maschinenkaverne mit Traforaum und Toskammer errichtet. Letztere bildet die Wendemöglichkeit für die Tunnelbohrmaschine. Die Entfernung von der Kaverne bis zur Außenseite des Felsmassivs bemisst sich nach der Dichtigkeit des Gesteins. Ist diese nicht ausreichend groß, muss ein Dichtungsschleier vorgesehen werden.

Ein separater Druckstollen verbindet das Meerestief mit der Maschinenkaverne. Am Einlaufbereich des Druckstollens wird ein Verschlussorgan mit einer Rechenanlage und einem Einlaufbauwerk installiert. Der Druckstollen und die Kaverne werden mit separaten Regel- und Verschlussorganen wie z.B. Ringkolbenventilen, Rückschlagklappe usw. ausgebildet.

Das Meereswasser strömt über den Druckstollen und -leitungen in die Speichertunnel und treibt dabei Pumpturbinen (synchron und asynchron) an. Über diese Maschinen können die Speichertunnel auch wieder geleert werden. Der landseitige Wetter- und Revisionsschacht an der Küste dient dabei als Belüftungs- und Wetterschacht. Bei Bedarf kann ein zusätzlicher Revisions- und Montagetunnel zwischen den Zwillingstunneln gebohrt werden, der dann auch die Belüftung der Kaverne gewährleisten sollte. Dem Grunde nach können jedoch die Speichertunnel selbst diese Aufgaben übernehmen, und/oder aber es kann ein Montagegang im Scheitel des jeweiligen Tunnels vorgesehen werden.

Ein Pumpspeicherwerk mit zwei Speicherstollen von 50 km Länge und einem Durchmesser von 12,5 m hat ein Speichervolumen von ca.12 Mill. m³. Bei einer Fallhöhe von 500 m wie z.B. in der norwegischen Rinne stünde damit eine installierte Leistung von 2.180 MW über 6 Stunden bzw. von 1.635 MW über 8 Stunden zur Verfügung.

Abweichend vom Beispiel 1 kann die Kaverne ohne zusätzlichen wasserseitigen Schacht nicht vorbereitet werden (keine Parallelarbeiten). Der für die Errichtung dieser Variante bis zur Inbetriebnahme benötigte Zeitraum ist dann deutlich länger (ca. verdoppelt) zu veranschlagen.

### Figurenlegende:

Figur 1:
- 1: Festland oder Inselbereich
- 2: Gewässerspiegel
- 3: Sedimentbereich
- 4: Felshorizont
- 5: Be-, Entlüftungs- und Revisionsschacht
- 6: Speicherstollen bzw. Tunnel
- 7: Kaverne mit Maschinen- und Traforaum sowie Toskammer
- 8: Auslauf-, Einlauf-, Wetter- und Versorgungsschacht
- 9: Toskammer

Figur 2:
- 1: Schütz / Schieber
- 2: Ein- und Auslauf mit Rechen
- 3: Montage und Revisionsschacht

Figur 3:
- 1: Schütz / Schieber;
- 2: Ein- und Auslauf mit Rechen;
- 3: Plattform;
- 4: Betriebsgebäude und Werkhalle mit Portalkran, Hebeeinrichtung und Fahrstuhl

Figur 4:
- 1: Be-, Entlüftungs- und Revisionsschacht
- 2: Speicherstollen bzw. Tunnel
- 3: wasserseitiger Schacht (strichliniert gezeichnet; optional)
- 4: Druckstollen für den Wasser-Ein- und Auslauf
- 5: Maschinenkaverne
- 6: Maschinen- und Traforaum sowie Toskammer
- 7: Meerestief
- 8: Toskammer
- 9: Dichtungsschleier (strichliniert gezeichnet; optional)

## Patentansprüche

1. Gewässer-Pumpspeicherwerk, umfassend
- einen Speicher-Hohlraum (6) in der Form eines Tunnels oder Stollens mit mindestens einem in einem Boden eines Gewässers oder im Gestein und/oder Sediment (3) eines Meereshanges (4) angeordneten ersten Ende und einem zweiten Ende, welches sich unterhalb einer Land-Oberfläche (1) befindet,
- eine Maschinenkaverne (7), die einen Anschluss an das erste Ende des Hohlraums (6) aufweist und mit einem Maschinensatz bestückt oder bestückbar ist, umfassend mindestens eine Pumpe zum Abpumpen von Wasser aus dem Hohlraum (6) und mindestens eine Turbine zur Stromerzeugung beim Fluten des Hohlraums (6) mit Wasser,
- einen Wasser-Zulauf (8) zur Maschinenkaverne (7), und
- einen Entlüftungsschacht (5), **dadurch gekennzeichnet, dass** sich der Entlüftungsschacht (5) von dem zweiten Ende des Hohlraums (6) bis zur Land-Oberfläche (1) erstreckt.

2. Gewässer-Pumpspeicherwerk nach Anspruch 1, weiterhin umfassend
- Einrichtungen zum ergänzenden Befüllen des Hohlraums mit Druckluft, zum Erzeugen von Energie durch entweichende Luft mit erhöhtem Druck und zum Dichten des Hohlraums gegen das Entweichen von Luft mit erhöhtem Druck.

3. Gewässer-Pumpspeicherwerk nach Anspruch 1 oder 2, worin der Wasser-Zulauf zur Maschinenkaverne (7) als Ein- und Auslaufschacht (8) ausgebildet ist, der sich, vorzugsweise senkrecht, von der Maschinenkaverne (7) ausgehend durch Gestein und/oder Sediment (3) des Gewässerbodens (4) hindurch bis in das darüber liegende Gewässer erstreckt.

4. Gewässer-Pumpspeicherwerk nach Anspruch 3, worin Bestandteile des Ein- und Auslaufschachts (8) bis über die Gewässeroberfläche (2) hinausragen, **dadurch gekennzeichnet, dass** der Schacht als Revisionsschacht mit weiteren Funktionen ausgebildet ist, vorzugsweise ausgewählt unter Versorgungs-, Wartungs- und Belüftungs-Funktionen.

5. Gewässer-Pumpspeicherwerk nach Anspruch 1 oder 2, worin der Wasser-Zulauf zur Maschinenkaverne (7) als waagrechter, schräg verlaufender oder senkrechter Druckstollen ausgebildet ist, der am Eingang zur Maschinenkaverne (7) mit einem Verschlussorgan ausgestattet ist, wobei sich der Druckstollen durch das Gestein und/oder Sediment (3) eines Meereshanges hindurch bis in ein seitlich dazu oder darüber befindliches Gewässer erstreckt.

6. Gewässer-Pumpspeicherwerk nach Anspruch 5, worin der Druckstollen zwischen dem Eintritt in das Gestein/Sediment (3) des Meereshanges und der Maschinenkaverne (7) eine Länge von mindestens der anstehenden Meerestiefe aufweist und/oder die Maschinenkaverne mit einem Dichtungsschleier gegen anstehendes Wasser abgedichtet ist.

7. Gewässer-Pumpspeicherwerk nach einem der voranstehenden Ansprüche, dessen Speicher-Hohlraum voneinander wasserdicht trennbare Abschnitte aufweist.

8. Gewässer-Pumpspeicherwerk nach einem der voranstehenden Ansprüche, bei dem der Speicher- Hohlraum (6) in seiner Längsrichtung bezüglich der Horizontalen ansteigend ausgebildet ist, derart dass er in dieser Längsrichtung kontinuierlich abgepumpt, belüftet bzw. mit Wasser geflutet werden kann.

9. Gewässer-Pumpspeicherwerk nach einem der voranstehenden Ansprüche, bei dem die mindestens eine Pumpe zum Abpumpen des Wassers und die mindestens eine Turbine zur Stromerzeugung in Form einer Pumpturbine vorliegen, die vorzugsweise eine drehzahlvariable Pumpturbine ist, die stärker bevorzugt mit einer weiteren, drehzahlfixierten Pumpturbine kombiniert ist.

10. Gewässer-Pumpspeicherwerk nach einem der voranstehenden Ansprüche, das mindestens eine Absperreinrichtung zum Öffnen und Verschließen zumindest eines Teils des Speicher-Hohlraums (6) gegenüber Wasser und ggf. zusätzlich gegenüber Druckluft und gegebenenfalls eine Steuerungseinheit zum Ansteuern der mindestens einen Absperreinrichtung aufweist.

11. Gewässer-Pumpspeicherwerk nach einem der voranstehenden Ansprüche, bei dem die mindestens eine Pumpe, vorzugsweise mit einem zugehörigen Ansaugrohr, zur Herstellung eines vorbestimmten Ansaugdrucks tiefer als die Sohle des Speicher-Hohlraums (6) angeordnet ist.

12. Gewässer-Pumpspeicherwerk nach einem der voranstehenden Ansprüche, bei dem die mindestens eine Turbine tiefer als die Sohle des Speicher-Hohlraums (6) angeordnet ist.

13. Gewässer-Pumpspeicherwerk nach einem der voranstehenden Ansprüche, bei dem ein Aus- und Einlaufbauwerk zum Führen des Wassers in den Wasser-Zulauf hinein bzw. aus diesem heraus vorgesehen ist, wobei das Aus- und Einlaufbauwerk im Bereich seiner Ein- und Auslauföffnung(en) vorzugsweise ein Mittel zum Zurückhalten von Verschmutzungen, insbesondere einen oder mehrere Rechen, aufweist.

14. Gewässer-Pumpspeicherwerk nach einem der voranstehenden Ansprüche, bei dem in der Maschinenkaverne (7) oder in der Nähe der Maschinenkaverne (7) eine Toskammer (9) vorgesehen ist, die turbulente Strömungen von einströmendem Wasser in eine laminare Strömung umwandeln kann, bevor das Wasser in den Speicher-Hohlraum (6) einläuft.

15. Verfahren zum Speichern und Freigeben von Energie mit Hilfe eines Gewässer-Pumpspeicherwerks nach einem der voranstehenden Ansprüche, umfassend die Schritte:
- teilweises oder vollständiges Entleeren des Speicher-Hohlraums(6) durch das Verdrängen von Wasser aus dem Speicher-Hohlraum (6) gegen den seitens des Gewässers auf den Speicher-Hohlraum (6) wirkenden hydrostatischen Druck mit Hilfe der mindestens einen Pumpe (Energiespeicher-Schritt),
- teilweises oder vollständiges Fluten des Speicher-Hohlraums (6) mit Wasser durch die mindestens eine Turbine (Energiefreigabe-Schritt) und
- Einspeisen der über die mindestens eine Turbine gewonnenen Energie mit Hilfe von Generatoren und Transformatoren in ein Stromnetz.

## Claims

1. A water pump storage station comprising
- a storage cavity (6) in the form of a tunnel or gallery having at least one first end arranged in a bottom of a body of water or in the rock and/or sediment (3) of a sea slope (4) and a second end located below a land surface (1),
- a machine cavern (7) which has a connection to the first end of the cavity (6) and is equipped or can be equipped with a machine set, comprising at least one pump for pumping water out of the cavity (6) and at least one turbine for generating electricity when the cavity (6) is flooded with water,
- a water inlet (8) to the machine cavern (7), and
- a vent shaft (5), **characterized in that** the vent shaft (5) extends from the second end of the cavity (6) to the land surface (1).

2. The water pump storage power station according to claim 1, further comprising
- devices for supplementing the cavity with compressed air, for generating energy by escaping air at elevated pressure and for sealing the cavity against the escape of air at elevated pressure.

3. The water pump storage station according to claim 1 or 2, wherein the water inlet to the machine cavern (7) is designed as an inlet and outlet shaft (8) which, preferably vertically, extends from the machine cavern (7) through rock and/or sediment (3) of the water bottom (4) into the water lying above it.

4. The water pump storage station according to claim 3, wherein components of the inlet and outlet shaft (8) project beyond the water surface (2), **characterized in that** the shaft is designed as an inspection shaft with further functions, preferably selected from supply, maintenance and ventilation functions.

5. The water pump storage station according to claim 1 or 2, wherein the water inlet to the machine cavern (7) is designed as a horizontal, obliquely running or vertical pressure tunnel which is equipped with a closure member at the entrance to the machine cavern (7), wherein the pressure tunnel extends through the rock and/or sediment (3) of a sea slope into a water body located laterally thereto or above.

6. The water pump storage station according to claim 5, wherein the pressure tunnel between the entry into the rock/sediment (3) of the sea slope and the machine cavern (7) has a length of at least the pending sea depth and/or the machine cavern is sealed with a grout curtain against pending water.

7. The water pump storage plant according to any one of the preceding claims, the storage cavity of which has sections that can be separated from each other in a watertight manner.

8. The water body pump storage station according to one of the preceding claims, in which the storage cavity (6) is designed to rise in its longitudinal direction with respect to the horizontal in such a way that it can be continuously pumped off, ventilated or flooded with water in this longitudinal direction.

9. The water pump storage station according to one of the preceding claims, in which the at least one pump for pumping off the water and the at least one turbine for generating electricity are present in the form of a pump turbine which is preferably a variable-speed pump turbine which is more preferably combined with a further, variable-speed pump turbine.

10. The water body pump storage station according to one of the preceding claims, which has at least one shut-off device for opening and closing at least part of the storage cavity (6) with respect to water and optionally additionally with respect to compressed air and optionally a control unit for controlling the at least one shut-off device.

11. The water pump storage station according to one of the preceding claims, in which the at least one pump, preferably with an associated suction pipe, is arranged deeper than the bottom of the storage cavity (6) for producing a predetermined suction pressure.

12. The water body pumped-storage reservoir in accordance with one of the preceding claims, in which the at least one turbine is arranged lower than the bottom of the reservoir cavity (6).

13. The water body pump storage station according to one of the preceding claims, in which an outlet and inlet structure for guiding the water into and out of the water inlet is provided, wherein the outlet and inlet structure preferably has a means for retaining contamination, in particular one or more rakes in the region of its inlet and outlet opening(s).

14. The water pump storage station according to one of the preceding claims, in which a cushioning chamber (9) is provided in the machine cavern (7) or in the vicinity of the machine cavern (7), which cushioning chamber (9) can convert turbulent flows of inflowing water into a laminar flow before the water enters the storage cavity (6).

15. A process for storing and releasing energy by means of a water pump storage plant in accordance with one of the preceding claims, comprising the steps:
- partially or completely emptying the storage cavity (6) by displacing water from the storage cavity (6) against the hydrostatic pressure acting on the storage cavity (6) on the part of the water by means of the at least one pump (energy storage step),
- partially or completely flooding the storage cavity (6) with water through the at least one turbine (energy release step), and
- feeding the energy generated by at least one turbine into an electricity grid with the aid of generators and transformers.

## Revendications

1. Centrale hydroélectrique à accumulation par pompage, comprenant
- une cavité d'accumulation (6) sous la forme d'un tunnel ou d'une galerie avec au moins une première extrémité disposée dans un sol d'une pièce d'eau ou dans la roche et/ou le sédiment (3) d'un versant sous-marin (4) et avec une deuxième extrémité, qui se trouve en dessous d'une surface du terrain (1),
- une caverne des machines (7), qui présente un raccordement à la première extrémité de la cavité (6) et qui est ou peut être équipée d'un ensemble de machines, comprenant au moins une pompe pour pomper de l'eau hors de la cavité (6) et au moins une turbine pour la production d'électricité lors du remplissage de la cavité (6) avec de l'eau,
- une arrivée d'eau (8) à la caverne des machines (7) et
- un puits d'aération (5),
**caractérisée en ce que** le puits d'aération (5) s'étend depuis la deuxième extrémité de la cavité (6) jusqu'à la surface du terrain (1).

2. Centrale hydroélectrique à accumulation par pompage selon la revendication 1, comprenant en outre
- des dispositifs pour le remplissage complémentaire de la cavité avec de l'air comprimé, afin de produire de l'énergie par l'air s'échappant sous haute pression et pour colmater la cavité contre l'échappement d'air à haute pression.

3. Centrale hydroélectrique à accumulation par pompage selon une revendication 1 ou 2, dans laquelle l'arrivée d'eau à la caverne des machines (7) est réalisée sous la forme d'un puits d'entrée et de sortie (8) qui s'étend, de préférence verticalement, depuis la caverne des machines (7) à travers la roche et/ou le sédiment (3) du fond sous-marin (4) jusque dans l'eau qui se trouve au-dessus.

4. Centrale hydroélectrique à accumulation par pompage selon la revendication 3, dans laquelle des composants du puits d'entrée et de sortie (8) se prolongent jusqu'au-dessus de la surface de l'eau (2), **caractérisée en ce que** le puits est réalisé sous la forme d'un puits de visite avec d'autres fonctions, sélectionnées de préférence parmi des fonctions d'alimentation, d'entretien et d'aération.

5. Centrale hydroélectrique à accumulation par pompage selon une revendication 1 ou 2, dans laquelle l'arrivée d'eau à la caverne des machines (7) est formée par une galerie sous pression s'étendant horizontalement, en oblique ou verticalement, qui est équipée d'un organe de fermeture à l'entrée vers la caverne des machines (7), dans laquelle la galerie sous pression s'étend à travers la roche et/ou le sédiment (3) d'un versant sous-marin jusque dans une masse d'eau trouvant à côté ou au-dessus de celui-ci.

6. Centrale hydroélectrique à accumulation par pompage selon la revendication 5, dans laquelle la galerie sous pression présente entre l'entrée dans la roche/le sédiment (3) du versant sous-marin et la caverne des machines (7) une longueur au moins égale à la profondeur de la masse d'eau supérieure et/ou la caverne des machines est rendue étanche par rapport à l'eau supérieure avec un voile d'étanchéité.

7. Centrale hydroélectrique à accumulation par pompage selon l'une quelconque des revendications précédentes, dont la cavité d'accumulation présente des parties séparables l'une de l'autre de façon étanche à l'eau.

8. Centrale hydroélectrique à accumulation par pompage selon l'une quelconque des revendications précédentes, dans laquelle la cavité d'accumulation (6) est formée selon sa direction longitudinale avec une pente ascendante par rapport à l'horizontale, de telle manière qu'elle puisse être de façon continue pompée, aérée ou remplie d'eau dans cette direction longitudinale.

9. Centrale hydroélectrique à accumulation par pompage selon l'une quelconque des revendications précédentes, dans laquelle ladite au moins une pompe destinée au pompage de l'eau et ladite au moins une turbine destinée à la production d'électricité se présentent sous la forme d'une pompe-turbine, qui est de préférence une pompe-turbine à vitesse variable, qui de préférence encore est combinée avec une autre pompe-turbine à vitesse fixe.

10. Centrale hydroélectrique à accumulation par pompage selon l'une quelconque des revendications précédentes, qui présente au moins un dispositif d'arrêt pour l'ouverture et la fermeture d'au moins une partie de la cavité d'accumulation (6) par rapport à l'eau et éventuellement en outre par rapport à l'air comprimé et qui présente éventuellement une unité de commande pour commander ledit au moins un dispositif d'arrêt.

11. Centrale hydroélectrique à accumulation par pompage selon l'une quelconque des revendications précédentes, dans laquelle ladite au moins une pompe, de préférence avec un tube d'aspiration correspondant, est disposée plus profondément que le fond de la cavité d'accumulation (6) pour créer une pression d'aspiration prédéterminée.

12. Centrale hydroélectrique à accumulation par pompage selon l'une quelconque des revendications précédentes, dans laquelle ladite au moins une turbine est disposée plus profondément que le fond de la cavité d'accumulation (6).

13. Centrale hydroélectrique à accumulation par pompage selon l'une quelconque des revendications précédentes, dans laquelle il est prévu un ouvrage de sortie et d'entrée pour le guidage de l'eau dans l'arrivée d'eau ou pour l'en évacuer, dans laquelle l'ouvrage de sortie et d'entrée présente dans la région de son/ses ouverture(s) de préférence un moyen de retenue des saletés, en particulier une ou plusieurs grille(s).

14. Centrale hydroélectrique à accumulation par pompage selon l'une quelconque des revendications précédentes, dans laquelle il est prévu dans la caverne des machines (7) ou à proximité de la caverne des machines (7) une chambre d'amortissement (9), qui peut convertir des écoulements turbulents de l'eau entrante en un écoulement laminaire, avant que l'eau pénètre dans la cavité d'accumulation (6) .

15. Procédé pour accumuler et libérer de l'énergie à l'aide d'une centrale hydroélectrique à accumulation par pompage selon l'une quelconque des revendications précédentes, comprenant les opérations suivantes:
- vider partiellement ou entièrement la cavité d'accumulation (6) en refoulant l'eau hors de la cavité d'accumulation (6) contre la pression hydrostatique exercée par l'eau sur la cavité d'accumulation (6) à l'aide de ladite au moins une pompe (opération d'accumulation d'énergie),
- remplir partiellement ou entièrement la cavité d'accumulation (6) avec de l'eau à travers ladite au moins une turbine (opération de libération d'énergie), et
- injecter l'énergie produite par ladite au moins une turbine à l'aide de générateurs et de transformateurs dans un réseau électrique.
